(19) Europäisches Patentamt
European Patent Office
Office européen des brevets

(11) **EP 2 462 710 B1**

(12) **EUROPÄISCHE PATENTSCHRIFT**

(45) Veröffentlichungstag und Bekanntmachung des Hinweises auf die Patenterteilung:
**10.09.2014 Patentblatt 2014/37**

(21) Anmeldenummer: **10737514.9**

(22) Anmeldetag: **22.07.2010**

(51) Int Cl.:
***H04B 10/572*** *(2013.01)*

(86) Internationale Anmeldenummer:
**PCT/EP2010/004511**

(87) Internationale Veröffentlichungsnummer:
**WO 2011/015290 (10.02.2011 Gazette 2011/06)**

(54) **OPTISCHER TRANSCEIVER UND FASEROPTISCHER KREISEL**

OPTICAL TRANSCEIVER AND FIBER-OPTIC GYRO

ÉMETTEUR-RÉCEPTEUR OPTIQUE ET GYROSCOPE À FIBRE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **04.08.2009 DE 102009036022**

(43) Veröffentlichungstag der Anmeldung:
**13.06.2012 Patentblatt 2012/24**

(73) Patentinhaber: **Northrop Grumman LITEF GmbH 79115 Freiburg (DE)**

(72) Erfinder: **VOIGT, Sven 79111 Freiburg (DE)**

(74) Vertreter: **Müller - Hoffmann & Partner Patentanwälte St.-Martin-Strasse 58 81541 München (DE)**

(56) Entgegenhaltungen:
**WO-A1-93/11589    US-A- 5 008 889**
**US-A- 6 134 253**

**Beschreibung**

Faseroptische Kreisel finden beispielsweise in Navigationssystemen Verwendung. Faseroptische Kreisel zum Einsatz in inertialen Navigationssystemen (INS), für die eine hohe Genauigkeit gefordert wird, basieren typischerweise auf hochstabilen Superfluoreszenz-Lichtquellen mit einer Lichtwellenlänge von etwa 1550 nm. Die Wellenlängenabhängigkeit über Temperatur von Superfluoreszenz-Lichtquellen bei 1550nm beträgt typischerweise 10ppm/°C. Eine Verbesserung auf Werte von etwa 0,05 ppm/°C ist nur durch Verwendung wellenlängenstabilisierender Elemente wie z.B. thermisch kompensierte Bragg-Gitter erreichbar.

Superlumineszenzdioden (SLDs) sind preiswerte Halbleiter-Lichtquellen, sind aber deutlich weniger stabil, was ihrem Einsatz in faseroptischen Kreiseln in Systemen mit hohen Genauigkeitsanforderungen bisher entgegensteht. SLDs haben eine vergleichsweise geringe Skalenfaktorgenauigkeit, die hauptsächlich aus ihrer Wellenlängeninstabilität resultiert. So ist die Wellenlänge einer SLD zum einen stark temperaturabhängig. Die Temperaturdrift beträgt etwa $|d\delta / dT| = 400$ ppm/°C. Eine weitere Ursache für die Wellenlängeninstabilität der SLD sind für Halbleiterlichtquellen typische Alterungsprozesse, aufgrund derer die Wellenlänge der SLD mit zunehmender Betriebsdauer zu- und die abgegebene Leistung abnimmt.

In der DE 103 07524 A1 ist eine Möglichkeit beschrieben, das Spektrum der SLD zur Stabilisierung auf eine externe Wellenlängenreferenz in Form eines oder zweier Faser-Bragg-Gitter zu führen. Die erforderliche Technologie ist komplex und teuer. Zudem sind zusätzliche Lichtverluste zu erwarten.

In der US 7,228,022 B1 ist ein integrierter optischer Transceiver mit einer Superfluoreszenz-Lichtquelle und einer Temperaturregelungseinheit beschrieben. Von der Lichtquelle ausgestrahltes Licht wird über den Lichtwellenleiter in einen faseroptischen Kreisel eingekoppelt und aus dem faseroptischen Kreisel ausgekoppeltes Licht wird in den Detektor geleitet.

In der WO 93/11589 A1 ist eine optische Lichtquelle beschrieben, deren emittierte Wellenlänge mit Hilfe von zwei Photodioden detektiert wird. Zur Stabilisierung der emittierten Wellenlänge wird durch eine Steuereinheit ein Treiberstrom in die Lichtquelle basierend auf den Werten aus den Photodioden angepasst.

Aufgabe der vorliegenden Erfindung ist es, einen kostengünstigen optischen Transceiver, einen faseroptischen Kreisel mit einem solchen Transceiver und ein Navigationssystem mit einem solchen faseroptischen Kreisel zur Verfügung zu stellen. Von der Aufgabe wird ein Verfahren zum Betrieb eines optischen Transceivers umfasst.

Diese Aufgabe wird durch Angabe eines optischen Transceivers gemäß Anspruch 1, eines faseroptischen Kreisels gemäß Anspruch 11, eines Navigationssystems gemäß Anspruch 12 und eines Verfahrens gemäß Anspruch 13 gelöst. Vorteilhafte Ausgestaltungen ergeben sich aus den jeweiligen Unteransprüchen.

Die Ausgestaltung eines solchen optischen Transceivers ermöglicht den Einsatz von Superlumineszenzdioden als Lichtquelle des optischen Transceivers. Der optische Transceiver ist beispielsweise in einen faseroptischen Kreisel integrierbar, der in einem inertialen Navigationssystem sinnvoll eingesetzt werden kann.

Im Nachfolgenden werden Ausführungsformen der Erfindung anhand der Figuren näher erläutert. Das Hauptaugenmerk liegt auf der Beschreibung und der Verdeutlichung der der Erfindung zugrunde liegenden Prinzipien. Merkmale der unterschiedlichen Ausführungsformen sind miteinander kombinierbar, sofern sie sich einander nicht ausschließen.

Im Folgenden wird die Erfindung anhand der Figuren näher erläutert.

Die Figur 1 zeigt eine schematisierte Draufsicht auf einen Teil eines optischen Transceivers gemäß einem Ausführungsbeispiel.

Die Figur 2 zeigt schematisch eine Kennlinie einer Wellenlängensensoreinrichtung für einen optischen Transceiver gemäß einer anderen Ausführungsform.

Die Figur 3 zeigt ein vereinfachtes Blockschaltbild eines optischen Transceivers mit einer Wellenlängenstabilisierungseinheit gemäß einem weiteren Ausführungsbeispiel.

Die Figur 4 zeigt schematisch eine typische Kennlinie einer Superlumineszenzdiode.

Die Figur 5 zeigt eine vereinfachte Übersichtsdarstellung eines faseroptischen Kreisels mit optischem Transceiver gemäß einem weiteren Ausführungsbeispiel.

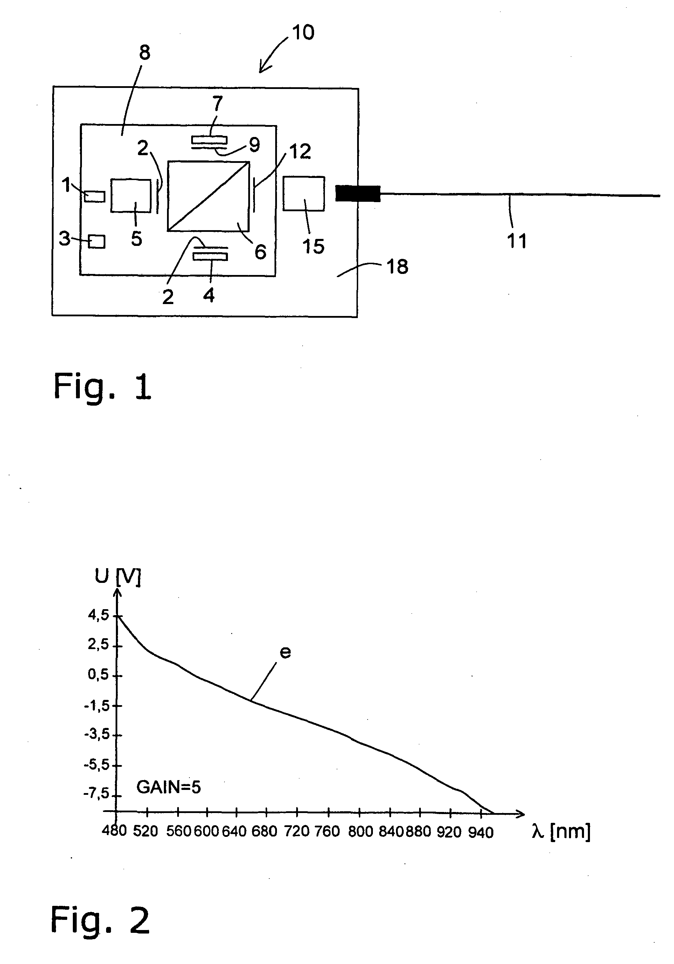

Die Figur 1 zeigt einen optischen Transceiver 10, dessen optische und optoelektronische Komponenten auf einer Unterlage angeordnet sind. Gemäß einer Ausführungsform umfasst der optische Transceiver 10 eine Temperaturregelungseinheit mit einem Temperatursensor 3 und einem thermoelektrischen Kühlelement 8 (TEC, thermoelectric cooler). In einer solchen Ausführungsform können die optischen und optoelektronischen Komponenten zumindest teilweise auf dem TEC 8 angeordnet (integriert) sein. Das TEC 8 ist beispielsweise ein Peltier-Element und kann seinerseits auf einem Träger befestigt sein, etwa einem Substrat 18, das aus Silizium, Siliziumoxid, einem Glas, einer Keramik oder einem Kunststoff besteht oder Schichten aus einem oder mehrerer dieser Materialien enthält. Gemäß anderen Ausführungsformen sind der TEC 8 und das Substrat 18 räumlich voneinander getrennt angeordnet und das TEC 8 über ein Koppelelement wärmeleitend mit dem Substrat 18 bzw. einer Lichtquelle 1 verbunden, wobei das Koppelelement das TEC 8 thermisch mit dem Substrat 18 bzw. der Lichtquelle 1 koppelt. Die optischen und optoelektronischen Komponenten können direkt auf dem Substrat 18 angeordnet oder ausgebildet sein. Das TEC 8 kann auch unterhalb des Substrats 18 angeordnet sein, so dass die optischen und optoelektronischen Komponenten einerseits und das TEC 8 andererseits auf einander gegenüberliegenden Oberflächen des Substrats 18 angeordnet sind.

Der optische Transceiver 10 weist eine Lichtquelle 1 auf, die das Licht erzeugt, welches der optische Transceiver 10 ausstrahlt. Eine erste Koppeloptik 5 wirkt als Kollimator für das von der Lichtquelle 1 abgestrahlte Licht und koppelt dieses an einen Strahlteiler 6, der das von der Lichtquellenseite eingestrahlte Licht beispielsweise auf eine zweite Koppeloptik 15 und einen Wellenlängensensor 7 aufteilt. Der Strahlteiler 6 teilt das von der Lichtquelle 1 emittierte Licht beispielsweise im Verhältnis von etwa 1:1 zwischen beiden Richtungen auf. Die zweite Koppeloptik 15 fokussiert einen ersten Anteil des von der Lichtquelle 1 emittierten Lichts auf einen Lichtleiter 11, beispielsweise auf die Eintrittsfläche einer Glasfaser. Ein zweiter Anteil des von der Lichtquelle 1 emittierten Lichts strahlt kollimiert oder auch mehr oder weniger fokussiert auf den Wellenlängensensor 7 ein.

Vom optischen Transceiver 10 empfangenes und aus dem Lichtleiter 11 in Richtung des Strahlteilers 6 austretendes Licht wird vom Strahlteiler 6 beispielsweise im Verhältnis 1:1 zwischen einem Detektor 4 und der Lichtquelle 1 aufgeteilt oder mehr oder weniger vollständig zum Detektor 4 umgeleitet. Der Detektor 4 ist beispielsweise eine zur Detektion eines modulierten Interferometersignals geeignete PIN-Fotodiode, beispielsweise dann, wenn der optische Transceiver in einem faseroptischen Kreisel eingesetzt wird. Der Detektor 4 erzeugt aus dem im empfangen Lichtstrahl enthaltenen Lichtsignal ein elektrisches Detektionssignal. In anderen Applikationen kann eine andere Art der Auswertung erforderlich und eine andere Art von Detektor vorgesehen sein. In anderen Anwendungen kann der optische Transceiver 10 ausschließlich als Sender und ohne Detektor 4 betrieben werden. Gemäß einer Ausführungsform liegen sich die erste und zweite Koppeloptik 5, 15 am dazwischenliegenden Strahlteiler 6 gegenüber, wie sich auch der Detektor 4 und der Wellenlängensensor 7 am Strahlteiler 6 gegenüberliegen. Andere Ausführungsformen können diesbezüglich eine andere Zuordnung vorsehen.

In den kollimierten Strahlengängen können ein oder mehrere Polarisatoren 2, 12 vorgesehen sein. Zwischen dem Strahlteiler 6 und dem Wellenlängensenor 7 kann ein Neutralfilter 9 zur Anpassung des Lichtpegels zur Auswertung im Wellenlängensensor 7 angeordnet sein. Die genannten optischen und optoelektronischen Elemente können beispielsweise sämtlich auf dem TEC 8 angeordnet sein. Gemäß anderen Ausführungsformen ist nur ein Teil dieser Elemente auf dem TEC 8 angeordnet, beispielsweise alle genannten mit Ausnahme der zweiten Koppeloptik 15 und des Lichtleiters 11.

Die Lichtquelle 1 ist steuerbar und kann vergleichsweise breitbandig sein. Gemäß einer Ausführungsform ist die Lichtquelle 1 eine Halbleiterlichtquelle, beispielsweise eine Superlumineszenzdiode (SLD, auch ASE-Diode, amplified spontaneous emission). SLDs weisen eine hohe Lichtleistung auf. Die Emissionsbandbreite beträgt typischerweise 20 bis 100 nm. Beispielsweise ist die Lichtquelle 1 eine SLD, die Licht mit einer mittleren Lichtwellenlänge von etwa 830 nm emittiert, bei einer Emissionsbandbreite von mehreren 10 Nanometern.

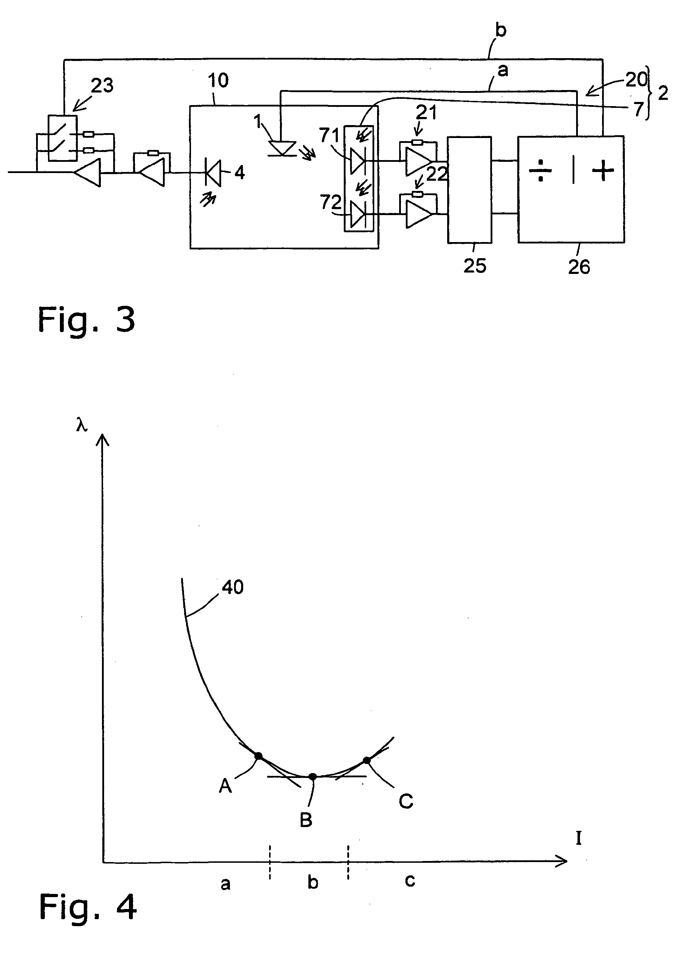

Der Wellenlängensensor 7 ist Teil einer Wellenlängen-Stabilisierungseinheit, die neben dem Wellenlängensensor 7 noch eine Regelschaltung umfasst und anhand der Figur 3 näher erläutert wird. Die Wellenlängen-Stabilisierungseinheit erfasst eine Wellenlängendrift des von der Lichtquelle 1 emittierten Lichts und kompensiert diese mindestens teilweise. Die Wellenlängendrift ist eine alterungsbedingte Änderung der Wellenlänge des von der Lichtquelle 1 emittierten Lichtes in Abhängigkeit von der Betriebsdauer der Lichtquelle 1. Typischerweise führen Alterungseffekte in Halbleiter-Lichtquellen zu einer Verschiebung des Emissionsspektrums hin zu größeren Wellenlängen. SLDs sind daher instabile Lichtquellen.

Der Wellenlängensensor 7 umfasst beispielsweise zwei Fotodioden, die so angeordnet sind, dass sie aufgrund ihrer Lage unterschiedliche spektrale Empfindlichkeiten aufweisen. Gemäß einer Ausführungsform ist der Wellenlängensensor 7 eine Doppel-PIN-Fotodiode, bei der zwei pin-Übergänge vertikal übereinander in einem Halbleitersubstrat ausgebildet sind. Aufgrund der unterschiedlichen Abstände der beiden pin-Übergange zu der dem einfallenden Licht zugewandten lichtempfindlichen Fläche des Wellenlängensensors 7 ergeben sich für die beiden pin-Übergänge bzw. PIN-Fotodioden unterschiedliche spektrale Empfindlichkeiten. Die Fotoströme der beiden Fotodioden werden verstärkt und zueinander ins Verhältnis gesetzt.

In der Figur 2 ist eine Kennlinie e eines Wellenlängensensors dargestellt, die die Abhängigkeit einer zum Quotientensignal proportionalen Ausgangsspannung U des Wellenlängensensors von der mittleren Wellenlänge $\lambda$ des vom Wellenlängensensor empfangenen Lichts wiedergibt. An der Abszisse ist die mittlere Wellenlänge $\lambda$ in Nanometern und an der Ordinate im linearen Maßstab das Ausgangssignal U in Volt aufgetragen. Die Kennlinie wurde bei einer Temperatur von 22°C aufgenommen. Es ergibt sich eine über weite Bereiche nahezu lineare Abhängigkeit des Ausgangssignals von der Wellenlänge. Die Verstärkungsfaktoren für beide Fotoströme können derart gewählt werden, dass die Empfindlichkeit bei gleich bleibender Linearität verbessert werden kann.

Für den Wellenlängenbereich zwischen 800 nm und 840 nm ergibt sich mit der für die aufgenommene Kennlinie gewählten Verstärkung (Gain=5) eine Empfindlichkeit von etwa -22 mV/nm. Das entspricht bei einer Wellenlänge von 820 nm einer Spannungsdifferenz von etwa -2 mV für 120 ppm Wellenlängenänderung.

Die thermische Empfindlichkeit der Doppel-PIN-Diode beträgt 1 nm/°K. Gemäß einer Ausführungsform wird der Wellenlängensensor daher temperaturgeregelt. Beispielsweise ist der Wellenlängensensor auf dem TCE 8 angeordnet, dessen Temperaturstabilität beispielsweise bei etwa 0.01° K liegt. Damit ergibt sich unter Berücksichtigung des verbleibenden Temperatureinflusses, der Rest-Nichtlinearität des Wellenlängensensors, der Genauigkeit der Regelschaltung und der Stromabhängigkeit der Bandbreite für SLDs eine Langzeit-Restunsicherheit bezüglich der Bestimmung bzw. Stabilisierung der Wellenlänge von etwa 30 ppm oder weniger.

In der Figur 3 ist eine Wellenlängen-Stabilisierungseinheit 27 für eine Lichtquelle 1 eines optischen Transceivers 10 dargestellt. Die Wellenlängen-Stabilisierungseinheit 27 umfasst eine Sensoreinrichtung zur Bestimmung einer Wellenlängendrift, beispielsweise einen Wellenlängensensor 7 mit zwei Fotodioden 71, 72 unterschiedlicher spektraler Empfindlichkeit. Die Wellenlängen-Stabilisierungseinheit 27 umfasst zudem eine Regelschaltung 20, die beispielsweise eine Verstärkereinrichtung aufweisen kann, beispielsweise zwei jeweils mit einer der Fotodioden 71, 72 verbundene Verstärker 21, 22, die Ausgangsignale der Sensoreinrichtung, beispielsweise die Fotoströme der Fotodioden 71, 72, aufbereiten und verstärken.

Gemäß einer Ausführungsform enthält die Regelschaltung 20 zudem einen AD-Wandler 25 zur Abtastung der verstärkten Ausgangssignale des Wellenlängensensors 7 und einen Signalprozessor 26, in dem aus den verstärkten und abgetasteten Ausgangssignalen der Sensoreinrichtung ein Quotientensignal gebildet wird. Zusätzlich kann die Regelschaltung bzw. der Signalprozessor einen Speicher für ein Kalibrier-Quotientensignal und einen Ausgangstreiber zur Ausgabe eines Steuersignals umfassen. Gemäß einer anderen Ausführungsform umfasst der optische Transceiver analoge Schaltkreise zur Bildung des Quotientensignals, zum Speichern des Kalibrier-Quotientensignals und zur Ausgabe eines Steuersignals. Der Ausgangstreiber ist mit der Lichtquelle 1 verbunden. Beispielsweise treibt der Ausgangstreiber ein Signal, über das die Lichtemission der Lichtquelle gesteuert wird, beispielsweise ein Signal an der Kathode oder der Anode einer SLD. Die Funktionalität der Komponenten der Wellenlängen-Stabilisierungseinheit kann in Bauteilen mit weiteren Funktionen realisiert und/oder in einem Substrat ausgebildet sein, auf dem das TEC aufgebracht ist.

Im Betrieb des optischen Transceivers 10 gelangt Licht aus der Lichtquelle 1 in die Fotodioden 71, 72. Aus den Fotoströmen der Fotodioden 71, 72 wird nach Verstärkung und Digitalisierung im Signalprozessor 26 das Quotientensignal gebildet, welches mit einem während einer Kalibrierung bestimmten Kalibrier-Quotientensignal verglichen wird. Weicht das aktuell ermittelte Quotientensignal vom Kalibrier-Quotientensignal ab, so wird die mittlere Wellenlänge des von der Lichtquelle 1 emittierten Lichts durch Änderung des Treiberstromes für die Lichtquelle 1 wieder auf die der Kalibrierung zugrunde gelegte mittlere Wellenlänge zurückgeführt. Die Wellenlängen-Stabilisierungseinheit 27 unterdrückt auf diese Weise eine zeitliche Drift der mittleren Wellenlänge bzw. des Spektrums des von der Lichtquelle 1 emittierten Lichts.

Die Wellenlängen-Stabilisierungseinheit bestimmt die aktuelle Lage des Emissionsspektrums des von der Lichtquelle emittierten Lichtes und regelt diese nach. Die Wellenlängen-Stabilisierungseinheit ermöglicht damit den Einsatz von SLDs für optische Transceiver auch in Anwendungen mit hohen Genauigkeits- und Stabilisationsanforderungen, beispielsweise in einem faseroptischen Kreisel für ein inertiales Navigationssystem. Der während einer Kalibrierung gemessene Wert des Quotientensignals wird durch Anpassung des Treiberstroms über die gesamte Lebensdauer der Lichtquelle hinweg nahezu konstant nachgeregelt.

Weiterhin besteht die Möglichkeit den Skalenfaktor aus der gemessenen Wellenlängenänderung zu berechnen, sofern die Wellenlängenabhängigkeit des Wellenlängensensors bekannt ist, beispielsweise im Falle eines kalibrierten Wellenlängensensors. In erster Näherung gilt, dass der zweite Skalenfaktor gleich dem ersten Skalenfaktor multipliziert mit dem Quotienten aus der ersten Wellenlänge und der zweiten Wellenlänge ist, also

$$\text{Skalenfaktor 2 = Skalenfaktor 1} \cdot \lambda_1 / \lambda_2.$$

Die Änderung des Treiberstromes für die Lichtquelle kann auch eine Änderung der optischen Ausgangsleistung der Lichtquelle zur Folge haben.

Die Figur 4 zeigt eine Kennlinie 40, die die Abhängigkeit der Wellenlänge der Lichtquelle 1 gemäß Figur 3 vom Treiberstrom für den Fall darstellt, dass die Lichtquelle 1 als SLD realisiert ist. An der Abszisse ist der Treiberstrom I in mA und an der Ordinate die Wellenlänge X in Nanometern aufgetragen. In einem ersten Bereich a nimmt die Wellenlänge mit steigendem Treiberstrom ab, in einem zweiten Bereich b bleibt die Wellenlänge bei einer Änderung des Treiberstromes, nahezu konstant und in einem dritten Bereich c bedingt eine Erhöhung des Treiberstroms eine größere Wellenlänge. Im ersten Bereich a dominiert in der SLD die Ladungsträgerinjektion. Im dritten Bereich dominieren aufgrund der hohen Stromdichte in der SLD und der damit verbundenen erhöhten Temperatur thermische Effekte (Thermooptik).

Zurückverweisend auf die Figur 3 umfassen daher weitere Ausführungsformen des optischen Transceivers 10 als Lichtquelle 1 eine SLD, die in einem Arbeitsbereich im Bereich des Minimums der Kennlinie 40 der Figur 4 betrieben wird. Beispielsweise wird die SLD in einem Arbeitspunkt A betrieben, der links vom Minimum der Kennlinie 40 im ersten Bereich a im fallenden Abschnitt der Kennlinie 40 liegt. Nach einer anderen Ausführungsform wird die SLD in einem Arbeitspunkt B betrieben, der im Minimum oder sehr nahe des Minimums der Kennlinie 40 liegt. Nach einer weiteren Ausführungsform wird die SLD in einem Arbeitspunkt C rechts vom Minimum im steigenden Abschnitt der Kennlinie 40 betrieben. Ähnliches gilt für andere Typen von Halbleiterlichtquellen. In jedem der drei Fälle wird der Arbeitspunkt durch die Höhe des Treiberstroms bestimmt.

Die Alterung führt bei SLDs nicht nur zu einer Erhöhung der Wellenlänge des abgestrahlten Lichtes sondern auch zu einem Verlust an optischer Leistung. Beispielsweise halbiert sich bei aluminiumfreien SLDs die optische Leistung bei 830 nm nach mehr als 2 Mio. Betriebstunden bei einer Temperatur von 25°C. Dagegen bleibt die Abhängigkeit der Wellenlänge vom Treiberstrom in erster Näherung von der Alterung unberührt.

Wird die SLD im Arbeitspunkt A betrieben, so kann die Wellenlängenänderung im Zuge der Alterung durch Erhöhung des Treiberstromes kompensiert werden, da die Erhöhung des Treiberstromes die Abnahme der Wellenlänge zur Folge hat. Durch die Erhöhung des Treiberstromes kann gleichzeitig die mit der Alterung einhergehende Abnahme der optische Leistung wieder erhöht werden. In diesem Fall kann nicht nur die Wellenlängendrift sondern auch die alterungsbedingte Abnahme der optischen Leistung zumindest teilweise kompensiert werden. Gemäß einer Ausführungsform kann die Wellenlängendrift durch Erhöhung des Treiberstromes, vollständig oder nahezu vollständig kompensiert werden.

Wird die SLD im Arbeitspunkt B betrieben, so besteht die Möglichkeit, einer alterungsbedingten Drift zu größeren Wellenlängen entweder durch Erhöhung oder durch Reduzierung des Treiberstroms entgegen zu wirken. Gemäß einer Ausführungsform wird der alterungsbedingten Drift zu größeren Wellenlängen durch Erhöhung des Treiberstroms entgegengewirkt, um gleichzeitig den alterungsbedingten Abfall der optischen Leistung zumindest zu einem gewissen Teil auszugleichen.

Wird die SLD im Arbeitspunkt C betrieben, so kann die durch die Alterung der Lichtquelle hervorgerufene Drift zu höheren Wellenlängen nur durch eine Verringerung des Treiberstroms kompensiert werden. Damit würde aber die abgegebene zum Treiberstrom proportionale Lichtleistung zusätzlich zu den Alterungseffekten reduziert. Bei einem Einsatz des beschriebenen optischen Transceivers in einem faseroptischen Kreisel kann ein Regler zur Lichtverstärkung im faseroptischen Kreisel Lichtverluste bis zu einem Schwellwert von etwa 3db ausregeln, ohne das Rauschen im elektrischen Pfad zu erhöhen. Muss die Lichtverstärkung weiter erhöht werden, um den Verlust an optischer Leistung elektrisch zu kompensieren, so ginge dies mit einem erhöhten Rauschen im elektrischen Pfad einher.

Wieder zurückverweisend auf die Figur 3, sind daher solche Ausführungsformen des optischen Transceivers 10 möglich, die einen Detektor 4 aufweisen und zusätzlich eine Steuerschaltung b enthalten, die unabhängig von der Regelschaltung 20 aufgebaut sein kann oder sich Resourcen mit dieser teilen kann, beispielsweise den Signalprozessor 26.

Um zu verhindern, dass im Arbeitspunkt C der genannte Schwellwert überschritten wird, ist in der Regelschaltung 20 gemäß der Figur 3 eine Schaltung 23 vorgesehen, über die der Verstärkungsfaktor für das Ausgangssignal des Detektors 4 umgeschaltet werden kann. Der Signalprozessor 26 ist so konfiguriert, dass zusätzlich zum Quotientensignal auch das Summensignal aus den verstärkten und abgetasteten Ausgangssignalen der Sensoreinrichtung, beispielsweise aus den Ausgangssignalen der Doppel-PIN-Fotodiode 71, 72 gebildet wird. Überschreitet das Summensignals einen vorgegebenen Schwellwert, so wird in der Schaltung 23 der Verstärkungssfaktor an einem Verstärker im Ausgangskreis des Detektors 4 umgeschaltet.

Dem Grunde nach kann auch ein Summensignal im Fall der Arbeitspunkte A oder B zur Regelung der Verstärkung herangezogen werden, beispielsweise dann, wenn eine Leistungsabnahme der Lichtquelle über die Zeit vernachlässigbar ist oder anderweitig ausgeglichen wird.

Der Arbeitspunkt A kann bei einem negativen Minimalen Anstieg, oder keinem Anstieg der Kennlinie 40 (Figur 4) als Startwert gewählt werden. Mit den entsprechenden Treiberströmen können bei Einsatz in faseroptischen Kreiseln diese innerhalb ihrer Spezifikation betrieben werden.

Gemäß einer Ausführungsform wird bei Wahl der Arbeitspunkte B und C der Treiberstrom auf maximal 80% des erlaubten Treiberstroms begrenzt, so dass ausreichend Regelungsspielraum zur Kompensation von Lichtwellenlänge und Leistung zur Verfügung steht. Eine Kennlinie Strom/optische Leistung hat in diesem Bereich den größten Anstieg. Bei der SLD ist der Anstieg bei 80% des maximalen Stroms im Bereich des Minimums, typisch sind leicht positive Werte kleiner 0,05 nm/mA und kleiner 63 ppm/mA. Eine Reproduzierbarkeit von Ergebnissen ist ebenfalls gegeben.

Bei der Anwendung von SLDs in IN-Systemen sollte das von der SLD emittierte Wellenlängenspektrum mit einer Stabilität von 30 ppm über mindestens 60.000 h stabil bleiben. Eine genaue Abschätzung bezüglich der optischen Leistung nach 60.000 h ist in etwa bekannt. Sie beträgt bei Interpolation etwa 1,5%. Aus einer Abschätzung aus Messungen ergibt sich, dass die resultierende Wellenlängenverschiebung weniger als 0,3 nm (360 ppm) betragen sollte. Bei 80% des maximalen Treiberstroms und leicht positivem Koeffizienten (>0,015 nm/mA) können die 360 ppm Wellenlängenverschiebung über eine Erhöhung des Treiberstroms kompensiert werden.

Gemäß der Figur 1 ist auf dem mit dem Substrat 18 gekoppelten thermoelektrischen Kühler 8 eine Polarisationseinrichtung zur Polarisation des Lichtes aus der Lichtquelle 1 im kollimierten Lichtstrahlengang vorgesehen. Die Polarisationseinrichtung weist zwei Polarisatoren 2 an zwei verschiedenen Positionen, einer ersten und einer zweiten Position auf. Die erste Position im kollimierten Lichtstrahlengang befindet sich zwischen der Lichtquelle 1 und dem Strahlteiler 6 und die zweite Position zwischen dem Strahlteiler 6 und dem Detektor 4. Ein weiterer Polarisator 12 befindet sich zwischen dem Strahlteiler 6 und dem Lichtleiter 11 und dient einer Polarisation des zurückgeführten Lichtes aus dem Lichtleiter 11. Der Lichtleiter 11 kann eine Polarisation des Lichtes erhaltene Faser sein.

Der optische Transceiver kann in einer Ausführungsform mit und in einer anderen Ausführungsform ohne Polarisatoren vorgesehen sein. Zwischen dem Lichtwellenlängensensor 7 und dem Strahlteiler 6 kann ein Neutralfilter zur Anpassung eines Lichtpegels vor dem Lichtwellenlängensensor vorgesehen sein.

Der beschriebene optische Transceiver in der Ausführungsform mit Polarisatoren und polarisationserhaltender lichtleitender Faser kann in einen faseroptischen Kreisel integriert werden.

Der beschriebene optische Transceiver kann aber auch in anderen Ausführungsformen in faseroptische Kreisel integriert werden. Möglich wäre es auch den optischen Transceiver mit anderen Instrumenten zu koppeln, zum Beispiel mit einem faseroptischen Stromsensor oder mit einem faseroptischen Hydrophon.

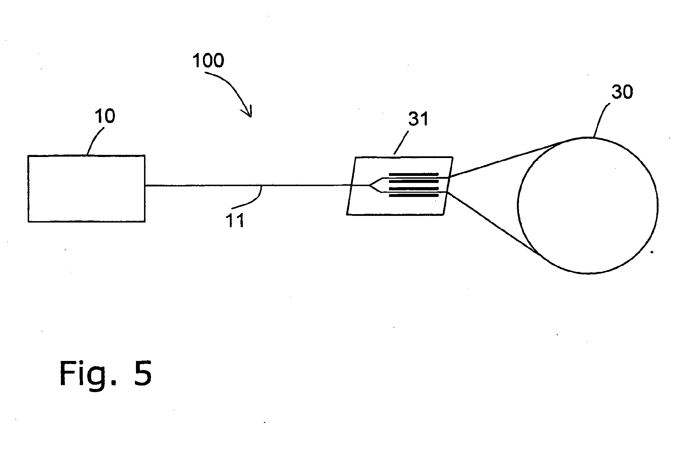

Die Figur 5 zeigt einen faseroptischen Kreisel 100, wie er beispielsweise in einem Navigationssystem Verwendung findet, mit einem optischen Transceiver 10. Eine Weiche 31 teilt den im Lichtleiter 11 geführten Lichtstrahl in zwei Teilstrahlen und koppelt die beiden Teilstrahlen zueinander gegenläufig in eine Faserspule 30 ein. Die Weiche 31 kann ein Strahlteiler oder ein integrierter optischer Chip sein. Die Faserspule 30 ist ein zu einer Spule mit ein oder mehreren Windungen geformter Lichtleiter, beispielsweise eine gewickelte Spule aus einer optischen Faser.

Durch den optischen Transceiver 10 wird polarisiertes, wellenlängenstabilisiertes Licht in die polarisationserhaltende, lichtleitende Faser eingekoppelt. Das Licht wird durch die Weiche 31 in zwei Teilstrahlen aufgeteilt. Die Teilstrahlen werden so in die Faserspule 30 eingekoppelt, dass sie die Windungen der Faserspule 30 in entgegengesetzte Richtungen durchlaufen. Ein erster Teilstrahl durchläuft die Faserspule 30 im Uhrzeigersinn, ein zweiter Teilstrahl entgegen dem Uhrzeigersinn. Wird die Anordnung in eine Rotation mit einer Winkelgeschwindigkeit $\omega$ um die Normale zur Windungsebene der Faserspule 30 gebracht, so verkürzt sich der Weg für den einen Teilstrahl, während er sich für den anderen entsprechend verlängert. Es ergeben sich für beide Teilstrahlen unterschiedliche Laufzeiten. Die daraus resultierende Phasenverschiebung zwischen beiden Teilstrahlen wird nach dem Zusammenführen der Teilstrahlen als Interferenzmuster in dem Detektor des optischen Transceivers 10 registriert. Die Phasenverschiebung ist ein Maß für die Winkelgeschwindigkeit, mit der der faseroptische Kreisel rotiert. Aus dem Ausgangssignal des Detektors wird in einer Auswerteeinheit die Winkelgeschwindigkeit des faseroptischen Kreisels bestimmt.

Der im optischen Transceiver integrierte Polarisator bewirkt, dass Licht mit nur einer Polarisationseinrichtung mit beispielsweise 25dB Extinktionsverhältnis den optischen Transceiver verlässt. Der interne Polarisator kann dabei ein Extinktionsverhältnis von 50dB aufweisen. Die 25 dB können durch eine Faserauskopplung, zum Beispiel nach mechanischer Belastung der lichtleitenden polarisationserhaltenden Faser beim Schweißen, verursacht sein. Das Licht wird dann nur in einer Polarisationsachse geführt, die der Polarisationsachse des integrierten optischen Chips entspricht. Ein Depolarisator ist somit nicht mehr notwendig.

Für die Anwendung des optischen Transceivers mit integriertem Polarisator im faseroptischen Kreisel bedeutet das, dass weniger Lichtwege entstehen, die zu Biasfehlern führen können.

**Patentansprüche**

1. Optischer Transceiver umfassend:

    eine durch einen Treiberstrom steuerbare Lichtquelle (1), die ein vom optischen Transceiver (10) ausgestrahltes Licht emittiert;
    eine Wellenlängen-Stabilisierungseinheit (27) zur Stabilisierung der Wellenlänge des von der Lichtquelle (1) emittierten Lichts und umfassend:

        eine Sensoreinrichtung zur Erfassung einer Wellenlängendrift;
        eine mit der Sensoreinrichtung und der Lichtquelle (1) verbundene Steuereinheit zur Steuerung des Treiberstroms in Abhängigkeit der Sensorsignale derart, dass einer Drift der Wellenlänge entgegengewirkt wird, wobei die Wellenlängen-Stabilisierungseinheit (27) einen Wellenlängensensor (7) zur Bestimmung einer mittleren Wellenlänge des emittierten Lichts und eine Regelschaltung (20) zur Kompensation einer Wellenlängendrift des emittierten Lichts umfasst.

        **dadurch gekennzeichnet.**
        **dass** der Wellenlängensensor (7) zwei Fotodioden (71, 72) unterschiedlicher spektraler Empfindlichkeit umfasst.

2. Optischer Transceiver nach Anspruch 1, **dadurch gekennzeichnet,**
**dass** die Lichtquelle (1) eine breitbandige Halbleiter-Lichtquelle ist.

3. Optischer Transceiver nach Anspruch 3, **dadurch gekennzeichnet.**
**dass** die Lichtquelle (1) eine Superlumineszenzdiode ist.

4. Optischer Transceiver nach Anspruch 3, **dadurch gekennzeichnet,**
**dass** ein Emissionsspektrum der Lichtquelle (1) unterhalb einer Wellenlänge von 1000 nm liegt.

5. Optischer Transceiver nach Anspruch 1, **dadurch gekennzeichnet,**
**dass** die Regelschaltung (20) zur Bildung eines Quotientensignales aus Ausgangssignalen der beiden Fotodioden (71, 72) und zur Steuerung des Treiberstroms derart konfiguriert ist, dass ein im Zuge einer Kalibrierung ermittelter Wert des Quotientensignales nahezu konstant bleibt.

6. Optischer Transceiver nach Anspruch 1, **gekennzeichnet durch**
einen Detektor (4) zur Messung von vom optischen Transceiver empfangenen Lichts, einen Verstärker zur Verstärkung eines elektrischen Ausgangssignals des Detektors (4) mit schaltbarem Verstärkungsfaktor und eine Steuerschaltung, die zur Steuerung des Verstärkungsfaktors in Abhängigkeit des Summensignals geeignet ist.

7. Optischer Transceiver nach Anspruch 6,
**gekennzeichnet durch**
eine Polarisationseinrichtung, die zwischen der Lichtquelle (1) und dem Detektor (4) vorgesehen ist.

8. Optischer Transceiver nach Anspruch 7, **dadurch gekennzeichnet,**
**dass** die Polarisationseinrichtung zwei Polarisatoren (2) an zwei Positionen umfasst, wobei die erste Position im kollimierten Lichtstrahlengang zwischen der Lichtquelle (1) und einem Strahlteiler (6) und die zweite Position zwischen dem Strahlteiler (6) und dem Detektor (4) vorgesehen sind.

9. Optischer Transceiver nach Anspruch 6, **dadurch gekennzeichnet,**
**dass** ein Polarisator (12) zwischen dem Strahlteiler (6) und der lichtleitenden Faser (11) vorgesehen ist.

10. Optischer Transceiver nach einem der Ansprüche 1 bis 9, **gekennzeichnet durch** eine Temperatursteuerungseinrichtung (8,3) mit
einem Temperatursensor (3), der Temperaturschwankungen erfasst; und einem thermoelektrischen Kühler (8), der Temperaturschwankungen ausgleicht.

11. Faseroptischer Kreisel (100) mit einem optischen Transceiver (10) nach einem der Ansprüche 1 bis 10.

12. Navigationssystem mit einem faseroptischen Kreisel (100) nach Anspruch 11.

13. Betriebsverfahren für einen optischen Transceiver umfassend:

Ermitteln einer aktuellen Lage eines Emissionsbandes einer Lichtquelle (1) des optischen Transceivers (10);
Vergleichen der aktuellen Lage mit einer Referenzlage des Emissionsbandes;
Steuern der Lichtquelle (1) derart, dass die aktuelle Lage des Emissionsbandes in Übereinstimmung mit der Referenzlage gebracht wird,
**dadurch gekennzeichnet,**
**dass** die aktuelle Lage aus einem Quotientensignal gebildet aus Ausgangssignalen zweier Fotodioden (71, 72) unterschiedlicher spektraler Empfindlichkeit ermittelt wird, auf die Licht aus der Lichtquelle (1) einfällt.

14. Betriebsverfahren nach Anspruch 13, **dadurch gekennzeichnet,**
**dass** eine Ermittlung der Referenzlage des Emissionsbandes in einem Kalibrierschritt erfolgt.

15. Betriebsverfahren nach Anspruch 13, **dadurch gekennzeichnet,**
**dass** die Lichtquelle (1) über einen der Lichtquelle (1) zugeführten Treiberstrom, der einen Strom über einen pn-Übergang in der Lichtquelle (1) einprägt, gesteuert wird.

16. Betriebsverfahren nach Anspruch 15, **dadurch gekennzeichnet,**

**dass** ein Arbeitspunkt der Lichtquelle (1) derart gewählt wird, dass eine Verschiebung des Emissionsbandes zu längeren Wellenlängen durch eine Erhöhung des Treiberstromes kompensierbar ist.

17. Betriebsverfahren nach Anspruch 15, **dadurch gekennzeichnet,**
**dass** ein Arbeitspunkt der Lichtquelle (1) derart gewählt wird, dass eine Verschiebung des Emissionsbandes zu längeren Wellenlängen durch eine Reduzierung des Treiberstromes kompensierbar ist, und ein Verstärkungsfaktor eines Detektors (4) des optischen Transceivers (10) in Abhängigkeit eines Summensignals gebildet aus den Ausgangssignalen der zwei Fotodioden (71, 72) unterschiedlicher spektraler Empfindlichkeit gesteuert wird.

**Claims**

1. An optical transceiver comprising:

   a light source (1) which can be controlled by a driver current and emits light, which is radiated by the optical transceiver (10);
   a wavelength stabilization unit (27) for stabilizing the wavelength of the light emitted by the light source (1), comprising:

      a sensor device for detecting a wavelength drift;
      a control unit connected to the sensor device and the light source (1) for controlling the driver current as a function of the sensor signals so as to counteract a drift of the wavelength, wherein
      the wavelength stabilization unit (27) comprises a wavelength sensor (7) for determining a central wavelength of the emitted light and a regulating circuit (20) for compensating for a wavelength drift of the emitted light,
      **characterized in that**
      the wavelength sensor (7) comprises two photodiodes (71, 72) of different spectral sensitivity.

2. The optical transceiver as claimed in claim 1, **characterized in that** the light source (1) is a broadband semiconductor light source.

3. The optical transceiver as claimed in claim 3, **characterized in that** the light source (1) is a superluminescent diode.

4. The optical transceiver as claimed in claim 3, **characterized in that**
   an emission spectrum of the light source (1) lies below a wavelength of 1000 nm.

5. The optical transceiver as claimed in claim 1, **characterized in that**
   the regulating circuit (20) is configured to form a ratio signal of output signals of the two photodiodes (71, 72) and to control the driver current so that a value of the ratio signal determined in the course of calibration remains almost constant.

6. The optical transceiver as claimed in claim 1, **characterized by**
   a detector (4) for measuring light received by the optical transceiver, an amplifier for amplifying an electrical output signal of the detector (4) with a switchable gain, and a control circuit which is suitable for controlling the gain as a function of the sum signal.

7. The optical transceiver as claimed in claim 6, **characterized by**
   a polarization device which is provided between the light source (1) and the detector (4).

8. The optical transceiver as claimed in claim 7, **characterized in that**
   the polarization device comprises two polarizers (2) at two positions, the first position being provided in the collimated light beam path between the light source (1) and a beam splitter (6) and the second position being provided between the beam splitter (6) and the detector (4).

9. The optical transceiver as claimed in claim 6, **characterized in that**
   a polarizer (12) is provided between the beam splitter (6) and the light-guiding fiber (11).

10. The optical transceiver as claimed in one of claims 1 to 9, **characterized by** a temperature control device (8, 3) having

a temperature sensor (3) which detects temperature variations; and
a thermoelectric cooler (8) which balances temperature variations.

**11.** A fiber-optic gyro (100) comprising an optical transceiver (10) as claimed in one of claims 1 to 10.

**12.** A navigation system comprising a fiber-optic gyro (100) as claimed in claim 11.

**13.** An operating method for an optical transceiver, comprising:

determining a current position of an emission band of a light source (1) of the optical transceiver (10);
comparing the current position with a reference position of the emission band;
controlling the light source (1) so that the current position of the emission band is brought to coincide with the reference position, **characterized in that**
the current position is determined from a ratio signal formed from output signals of two photodiodes (71, 72) of different spectral sensitivity, which position the light from the light source (1) strikes.

**14.** The operating method as claimed in claim 13, **characterized in that**
the reference position of the emission band is determined in a calibration step.

**15.** The operating method as claimed in claim 13, **characterized in that**
the light source (1) is controlled by means of a driver current which is delivered to the light source (1) and imposes a current across a pn junction in the light source (1).

**16.** The operating method as claimed in claim 15, **characterized in that**
a working point of the light source (1) is selected so that a shift of the emission band to longer wavelengths can be compensated for by increasing the driver current.

**17.** The operating method as claimed in claim 15, **characterized in that**
a working point of the light source (1) is selected so that a shift of the emission band to longer wavelengths can be compensated for by reducing the driver current, and a gain of a detector (4) of the optical transceiver (10) is controlled as a function of a sum signal formed from the output signals of the two photodiodes (71, 72) of different spectral sensitivity.

**Revendications**

**1.** Emetteur-récepteur optique comprenant :

une source de lumière (1), apte à être commandée par un courant d'attaque, qui émet une lumière émise par l'émetteur-récepteur (10) ;
une unité de stabilisation de longueur d'onde (27) pour stabiliser la longueur d'onde de la lumière émise par la source de lumière (1) et comprenant :

un dispositif capteur pour détecter une dérive de longueur d'onde ;
une unité de commande, reliée au dispositif capteur et à la source de lumière (1), pour commander le courant d'attaque en fonction des signaux de capteur de manière à contrer une dérive de la longueur d'onde, étant précisé que l'unité de stabilisation de longueur d'onde (27) comprend un capteur de longueur d'onde (7) pour définir une longueur d'onde moyenne de la lumière émise, et un circuit de régulation (20) pour équilibrer une dérive de longueur d'onde de la lumière émise,
**caractérisé en ce que** le capteur de longueur d'onde (7) comprend deux photodiodes (71, 72) de sensibilités spectrales différentes.

**2.** Emetteur-récepteur optique selon la revendication 1, **caractérisé en ce que** la source de lumière (1) est une source de lumière à semi-conducteur à large bande.

**3.** Emetteur-récepteur optique selon la revendication 3, **caractérisé en ce que** la source de lumière (1) est une diode superluminescente.

**4.** Emetteur-récepteur optique selon la revendication 3, **caractérisé en ce qu'**un spectre d'émission de la source de lumière (1) est situé au-dessous d'une longueur d'onde de 1000 nm.

**5.** Emetteur-récepteur optique selon la revendication 1, **caractérisé en ce que** le circuit de régulation (20) est configuré pour former un signal de quotient à partir de signaux de sortie des deux photodiodes (71, 72) et pour commander le courant d'attaque de telle sorte qu'une valeur du signal de quotient recherchée au cours d'un calibrage reste quasiment constante.

**6.** Emetteur-récepteur optique selon la revendication 1, **caractérisé par** un détecteur (4) pour mesurer une lumière reçue par l'émetteur-récepteur optique, un amplificateur pour amplifier un signal de sortie électrique du détecteur (4) avec un facteur d'amplification commutable, et un circuit de commande qui est apte à commander le facteur d'amplification en fonction du signal de somme.

**7.** Emetteur-récepteur optique selon la revendication 6, **caractérisé par** un dispositif de polarisation qui est prévu entre la source de lumière (1) et le détecteur (4).

**8.** Emetteur-récepteur optique selon la revendication 7, **caractérisé en ce que** le dispositif de polarisation comprend deux polarisateurs (2) à deux endroits, le premier endroit étant prévu sur la trajectoire de rayon lumineux collimaté, entre la source de lumière (1) et un séparateur de rayon (6), et le second entre le séparateur de rayon (6) et le détecteur (4).

**9.** Emetteur-récepteur optique selon la revendication 6, **caractérisé en ce qu'**un polarisateur (12) est prévu entre le séparateur de rayon (6) et la fibre photoconductrice (11).

**10.** Emetteur-récepteur optique selon l'une des revendications 1 à 9, **caractérisé par** un dispositif de commande de température (8, 3) avec
un capteur de température (3) qui détecte les variations de température ; et
un refroidisseur thermoélectrique (8) qui équilibre les variations de température.

**11.** Gyroscope à fibre optique (10) avec un émetteur-récepteur optique (10) selon l'une des revendications 1 à 10.

**12.** Système de navigation avec un gyroscope à fibre optique (100) selon la revendication 11.

**13.** Procédé de fonctionnement pour un émetteur-récepteur optique, comprenant :

la recherche d'une position actuelle d'une bande d'émission d'une source de lumière (1) de l'émetteur-récepteur optique (10) ;
la comparaison de la position actuelle avec une position de référence de la bande d'émission ;
la commande de la source de lumière (1) de manière à faire coïncider la position actuelle de la bande d'émission avec la position de référence,
**caractérisé en ce que** la position actuelle est recherchée à partir d'un signal de quotient formé à partir de signaux de sortie de deux photodiodes (71, 72) de sensibilités spectrales différentes sur lesquelles arrive la lumière provenant de la source de lumière (1).

**14.** Procédé de fonctionnement selon la revendication 13, **caractérisé en ce qu'**une recherche de la position de référence de la bande d'émission a lieu lors d'une étape de calibrage.

**15.** Procédé de fonctionnement selon la revendication 13, **caractérisé en ce que** la source de lumière (1) est commandée par l'intermédiaire d'un courant d'attaque, amené vers la source de lumière (1), qui applique un courant par l'intermédiaire d'une jonction pn dans ladite source de lumière (1).

**16.** Procédé de fonctionnement selon la revendication 15, **caractérisé en ce qu'**un point de travail de la source de lumière (1) est choisi de telle sorte qu'un déplacement de la bande d'émission vers des longueurs d'onde plus grandes puisse être compensé par une augmentation du courant d'attaque.

**17.** Procédé de fonctionnement selon la revendication 15, **caractérisé en ce qu'**un point de travail de la source de lumière (1) est choisi de telle sorte qu'un déplacement de la bande d'émission vers des longueurs d'onde plus grandes puisse être compensé par une réduction du courant d'attaque, et un facteur d'amplification d'un détecteur (4) de l'émetteur-récepteur optique (10) est commandé en fonction d'un signal de somme formé des signaux de sortie des deux photodiodes (71, 72) de sensibilités spectrales différentes.

Fig. 1

Fig. 2

# Fig. 3

# Fig. 4

100

10

31

30

11

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10307524 A1
- US 7228022 B1

- WO 9311589 A1